# DEMANDE DE BREVET EUROPEEN

(11) **EP 1 231 108 A1**
(43) Date de publication de la demande: **14.08.2002**
(21) Numéro de dépôt: 02290287.8
(22) Date de dépôt: 06.02.2002
(51) Int. Cl.: B60Q 1/04

(54) **Bloc optique de véhicule comportant des moyens améliorés de fixation de la glace**

(30) Priorité: 08.02.2001 FR 0101729
(71) Demandeur: Faurecia Industries, 92100 Boulogne-Billancourt (FR)
(72) Inventeur: Berne, Sébastian, 25200 Montbeliard (FR); Riviere, Caroline, 25700 Valentigney (FR)
(74) Mandataire: Jacobson, Claude

(57) **Abrégé**

Bloc optique pour véhicule automobile comportant un boîtier (5) adapté pour être solidaire d'un élément de structure ou de carrosserie (2) d'un véhicule, ledit boîtier (5) définissant un volume intérieur et une ouverture principale (13) tournée vers l'extérieur du véhicule, et une glace (15) adaptée pour être fixée au boîtier (5), de manière à obturer au moins partiellement ladite ouverture principale (13) au moyen d'organes de fixation (21, 22, 31, 32). Les organes de fixation (21, 22, 31, 32) solidarisent la glace (15) par rapport au boîtier (5) avec un jeu sensiblement axial par rapport à l'axe du véhicule, le jeu étant défini entre une position normale de fonctionnement et une position rétractée de la glace (15).

## Description

L'invention concerne un bloc optique pour véhicule automobile comportant un boîtier adapté pour être solidaire d'un élément de structure ou de carrosserie d'un véhicule, ledit boîtier définissant un volume intérieur et une ouverture principale tournée vers l'extérieur du véhicule, et une glace adaptée pour être fixée au boîtier, de manière à obturer au moins partiellement ladite ouverture principale au moyen d'organes de fixation.

En général, dans les blocs optiques de type connu, la glace est maintenue sur le boîtier soit par collage, soit au moyen de clips métalliques, de sorte que la fixation de la glace sur le boîtier est une fixation sensiblement sans jeu.

On a constaté, lors d'un choc d'un véhicule équipé d'un tel bloc optique avec un piéton, que l'impact du bloc optique lui-même était la cause de blessures du piéton, notamment au niveau du bassin.

Un but principal de l'invention est de minimiser les risques de blessures dus à l'impact du bloc optique sur le piéton.

A cet effet, un bloc optique suivant l'invention est caractérisé en ce que les organes de fixation solidarisent la glace par rapport au boîtier avec un jeu sensiblement axial par rapport à l'axe du véhicule, le jeu étant défini entre une position normale de fonctionnement et une position rétractée de la glace, et les organes de fixation comportent au moins une paire d'organes d'encliquetage complémentaires détachables, formés d'une pièce respectivement avec le boîtier et avec la glace, libérables par déformation élastique de l'un au moins desdits organes.

Grâce à cette disposition, le bloc optique participe à l'absorption d'énergie lors d'un choc avec un piéton.

Suivant d'autres caractéristiques de l'invention :
- le jeu axial de la glace par rapport au boîtier est supérieur à 40 millimètres ;
- le bloc optique comprend un joint élastique d'étanchéité qui, lorsque la glace est fixée sur le boîtier, coopère avec des surfaces périphériques de la glace et du boîtier, et est sollicité sensiblement de façon axiale, de sorte qu'il rappelle élastiquement la glace dans sa position normale de fonctionnement ;
- lesdits organes d'encliquetage complémentaires sont adaptés pour définir, lorsqu'ils sont assemblés, une butée axiale, la glace pouvant être détachée du boîtier sensiblement axialement lorsqu'ils sont dégagés ;
- l'un des organes d'encliquetage de ladite paire est un organe rigide, tandis que l'autre est un organe élastique ;
- les organes de fixation comportent une pluralité de paires d'organes d'encliquetage complémentaires, lesdits organes d'encliquetage étant répartis sur des régions périphériques du boîtier et de la glace ; et
- une paire d'organes d'encliquetage comprend un organe femelle configuré en gâche, et un organe mâle configuré en crochet susceptible de coulisser dans la gâche.

L'invention concerne également une face avant de véhicule automobile comportant un bloc optique du type décrit précédemment.

L'invention vise enfin un véhicule automobile équipé d'un tel bloc optique.

Un exemple de réalisation de l'invention va maintenant être décrit en regard des dessins annexés sur lesquels :
- la Figure 1 est une vue en perspective avant d'un bloc optique suivant l'invention et d'une partie de face avant de véhicule, de laquelle est solidaire le bloc optique ;
- la Figure 2 est une vue analogue montrant une partie inférieure du bloc optique représenté à la Figure 1 ;
- la Figure 3 est une vue en coupe du bloc optique des Figures précédentes, dans le plan P représenté sur ces Figures, dans sa position normale de fonctionnement ; et
- la Figure 4 est une vue analogue dans la position rétractée de la glace.

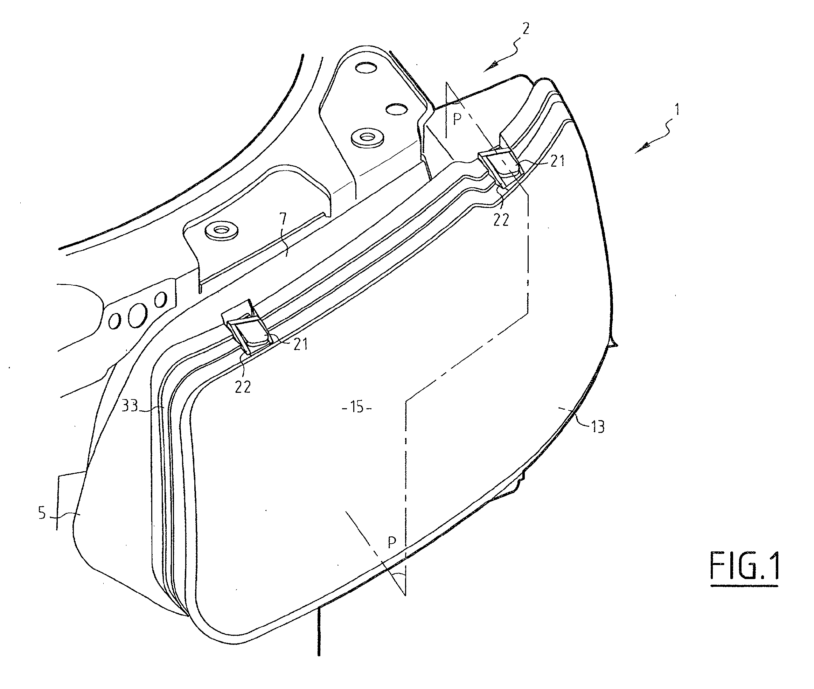

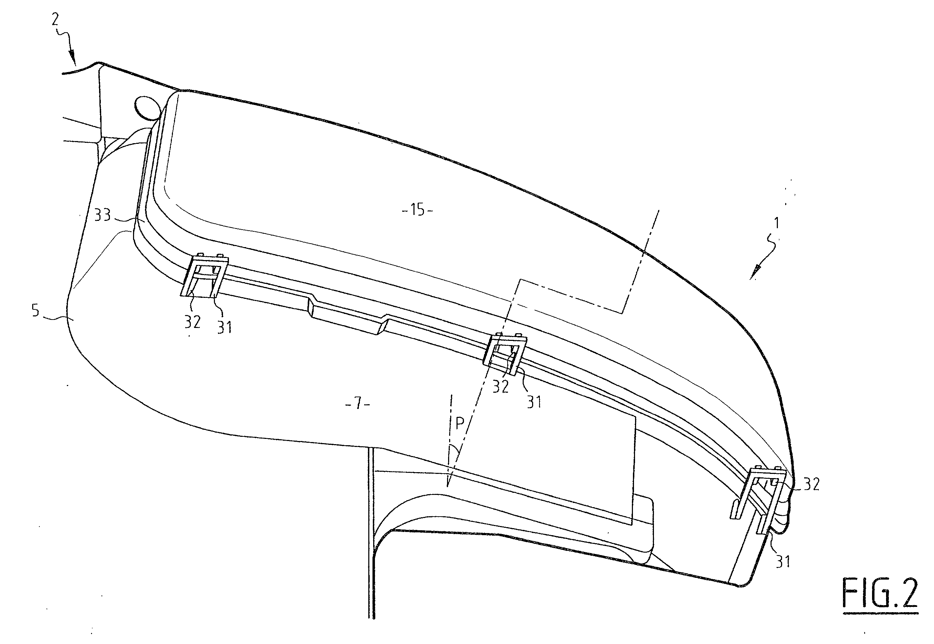

Sur les Figures 1 et 2, on a représenté un bloc optique avant 1, monté et fixé sur une partie de face avant 2 d'un véhicule automobile.

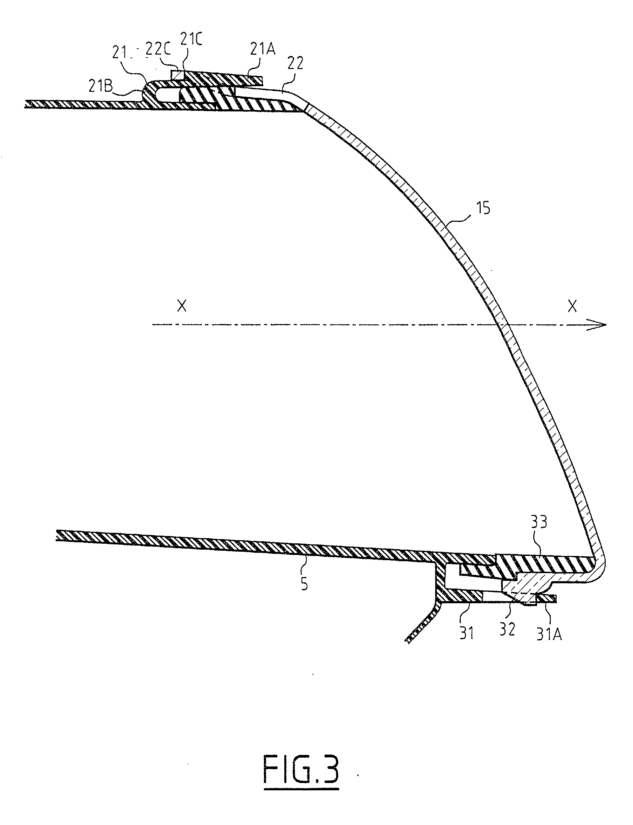

Afin de simplifier la description qui va suivre, le bloc optique sera orienté par rapport à sa disposition de fonctionnement sur le véhicule, et les termes « avant », « arrière », « inférieur », « supérieur » s'entendront suivant l'axe longitudinal X-X du véhicule (voir Figure 3).

De façon classique, un tel bloc optique avant 1 comprend un boîtier 5, intégré par complémentarité de forme dans la face avant 2 du véhicule. Ce boîtier 5 est soit rapporté sur la face avant 2, auquel cas il comporte sur sa périphérie des moyens de fixation sur ladite face avant 2, soit réalisé d'une pièce avec la face avant 2 ou avec d'autres éléments de carrosserie ou de structure du véhicule.

L'invention se conçoit de façon similaire pour un bloc optique disposé à un autre emplacement du véhicule, par exemple à l'arrière.

Le boîtier 5 présente une jupe périphérique 7 et un fond, situé du côté du compartiment moteur et intégré dans la face avant 2, qui définissent un volume intérieur du boîtier 5. Le boîtier 5 présente une ouverture frontale 13 constituant son ouverture principale, tournée vers l'extérieur du véhicule, opposée au fond de boîtier, et donnant un accès au volume intérieur de ce boîtier.

Le bloc optique 1 comporte d'autre part une glace 15 fixée sur le boîtier 5 de manière à obturer l'ouverture 13.

Le bloc optique 1 comprend d'autre part des éléments de projecteur, constitués par exemple de lampes, de douilles et de réflecteurs, fixés dans le volume intérieur du boîtier 5, et qui n'ont pas été représentés ici.

Les moyens de fixation de la glace 15 sur le boîtier 5 sont constitués par des paires d'organes d'encliquetage complémentaires 21, 22 (Figure 1), 31 ,32 (Figure 2).

Des premiers organes 21, 31 sont formés d'une pièce avec le boîtier 5 en faisant saillie de celui-ci, au voisinage de l'ouverture 13, vers l'avant.

Un nombre correspondant de deuxièmes organes 22, 32 sont formés d'une pièce avec la glace 15, et répartis sur la périphérie de celle-ci, en regard des premiers organes 21, 31.

Les paires d'organes d'encliquetage complémentaires 21, 22, 31, 32, représentées sur les Figures 1 et 2 au nombre de cinq, constituent des moyens de fixation libérables, de sorte qu'un utilisateur peut, depuis l'extérieur du véhicule et sans passer par un autre accès, notamment ménagé dans le compartiment moteur, détacher la glace 15 du boîtier 5. L'utilisateur peut ainsi opérer le remplacement ou la maintenance de projecteurs placés à l'intérieur du boîtier 5.

Afin de réaliser l'étanchéité entre l'intérieur et l'extérieur du boîtier 5, on prévoit un joint périphérique 33 interposé entre le boîtier 5 et la glace 15. Lorsque la glace 15 est fixée sur le boîtier 5, le joint 33 subit une compression axiale, suivant une direction correspondant à la direction d'encliquetage des paires d'organes complémentaires 21, 22, 31, 32.

Comme il sera mieux vu sur la Figure 3, les organes de fixation 21, 22, 31, 32 sont libérables par déformation élastique.

Les organes d'encliquetage 21 formés sur la partie supérieure du boîtier 5 sont constitués par des pattes élastiques dont la partie avant 21A est libre, tandis que la partie arrière 21B est liée au boîtier, de façon à constituer une articulation permettant un certain débattement de la partie avant 21A. Dans une partie intermédiaire, la patte 21 comporte une surface de butée verticale 21C.

L'organe d'encliquetage complémentaire 22, formé sur la partie supérieure de la glace 15, est constitué d'un arceau présentant une barrette 22C, tournée vers l'arrière et adaptée pour s'engager sur la partie intermédiaire 21C de la patte 21. Ces deux parties forment une butée axiale suivant l'axe X-X représenté sur la Figure, orienté d'arrière en avant, c'est-à-dire dirigé de l'intérieur vers l'extérieur du boîtier, et passant par l'ouverture principale 13. Ainsi, lorsque ces organes d'encliquetage complémentaires 21, 22 sont engagés comme cela a été représenté sur la Figure 3, ils s'opposent au retrait de la glace 15 du boîtier 5 suivant l'axe X-X. Dans cette position, la patte 21 étant libre de débattement dans l'arceau 22, un utilisateur peut très simplement manoeuvrer la patte 21 en appuyant sur sa partie avant 21A, et dégager ainsi les deux organes complémentaires l'un de l'autre, avant d'opérer le retrait de la glace 15 du boîtier 5.

L'organe d'encliquetage 31 formé sur la partie inférieure du boîtier 5 est constitué, à l'inverse, d'un arceau présentant une barrette transversale 31A faisant saillie vers l'avant.

L'organe d'encliquetage complémentaire 32 formé sur la partie inférieure de la glace 15 est formé d'un crochet s'engageant dans l'arceau 31, pour former avec la barrette 31A une butée axiale. L'arceau 31 est susceptible de débattement par déformation élastique, de façon à pouvoir être dégagé du crochet 32, sa position de repos correspondant à sa position d'engagement avec le crochet 32.

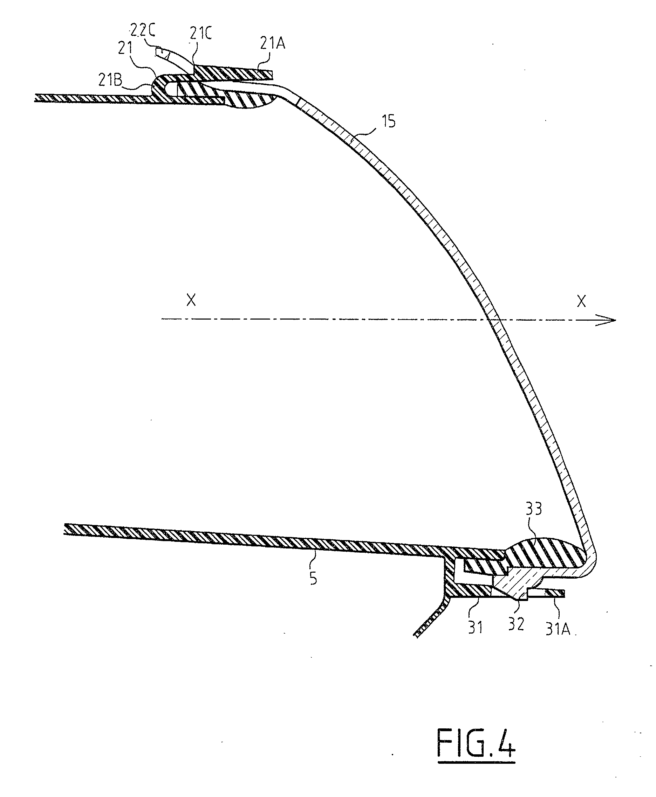

Dans cette configuration, chaque paire d'organe d'encliquetage est composée d'un organe femelle ou gâche 22, 31, et d'un organe mâle ou crochet 21, 32. Le crochet 21, 32 est susceptible de coulisser dans la gâche 22, 31, de sorte que la glace 15 est fixée sur le boîtier 5 avec un jeu axial d'axe X-X, entre une position normale de fonctionnement, telle que représentée sur la Figure 3, et une position rétractée de la glace 15, telle que représentée sur la Figure 4.

De préférence, le jeu axial de la glace 15 par rapport au boîtier 5 est supérieur à 40 millimètres.

Sur la figure 4, on a représenté le bloc optique 1 dans une position rétractée de la glace 15, position obtenue sous l'effet d'un impact de la glace 15 sur un obstacle (par exemple un piéton). Comme on le voit, les crochets 21, 32 ont décrit un mouvement de coulissement dans les gâches 22, 31, à partir de la position représentée à la figure précédente, à l'encontre d'un effort de rappel élastique créé par le joint 33. Dans la position rétractée de la glace 15, telle que représentée sur la Figure 4, le joint 33 est comprimé entre la glace 15 et un bord périphérique du boîtier 5, de sorte qu'il exerce un effort de rappel élastique sensiblement axial sur la glace 15 vers sa position de fonctionnement normal représentée à la Figure 3.

Il est clair que, dans le cas de chocs dépassant un certain seuil d'intensité, le jeu axial de la glace 15 par rapport au boîtier 5 et la compression du joint 33 ne suffisent pas à absorber la totalité de l'énergie du choc, de sorte que les gâches sont amenées à la rupture, avant rupture complète de la glace 15, lorsque celle-ci bute sur le boîtier 5 sur toute sa périphérie.

Compte-tenu de la nature des matériaux généralement utilisés pour réaliser les boîtiers 5 et les glaces 15, les organes d'encliquetage susceptibles de débattement sont ceux 21, 31 qui sont formés sur le boîtier 5, tandis que les organes d'encliquetage complémentaires 22, 32 formés sur la glace 15 sont rigides ou quasiment rigides, c'est-à-dire que leur déformation n'est pas significative dans l'assemblage ou la libération des organes d'encliquetage.

L'invention qui vient d'être décrite permet de réaliser un bloc optique capable de participer à l'absorption d'énergie de choc, et ainsi d'éviter certaines blessures à un piéton heurté par un véhicule équipé d'un tel bloc optique.

L'absorption de chocs par un tel bloc optique, dans la limite d'une certaine intensité, répond à des exigences croissantes visant à protéger les piétons vis-à-vis des véhicules.

## Revendications

1. Bloc optique pour véhicule automobile comportant un boîtier (5) adapté pour être solidaire d'un élément de structure ou de carrosserie (2) d'un véhicule, ledit boîtier (5) définissant un volume intérieur et une ouverture principale (13) tournée vers l'extérieur du véhicule, et une glace (15) adaptée pour être fixée au boîtier (5), de manière à obturer au moins partiellement ladite ouverture principale (13) au moyen d'organes de fixation (21, 22, 31, 32), **caractérisé en ce que** lesdits organes de fixation (21, 22, 31, 32) solidarisent la glace (15) par rapport au boîtier (5) avec un jeu sensiblement axial par rapport à l'axe du véhicule, le jeu étant défini entre une position normale de fonctionnement et une position rétractée de la glace (15), et les organes de fixation (21, 22, 31, 32) comportent au moins une paire d'organes d'encliquetage complémentaires détachables, formés d'une pièce respectivement avec le boîtier (5) et avec la glace (15), libérables par déformation élastique de l'un au moins (21, 31) desdits organes.

2. Bloc optique suivant la revendication 1, **caractérisé en ce que** le jeu axial de la glace (15) par rapport au boîtier (5) est supérieur à 40 millimètres.

3. Bloc optique suivant la revendication 1 ou 2, **caractérisé en ce qu'**il comprend un joint élastique d'étanchéité (33) qui, lorsque la glace (15) est fixée sur le boîtier (5), coopère avec des surfaces périphériques de la glace (15) et du boîtier (5), et est sollicité sensiblement de façon axiale, de sorte qu'il rappelle élastiquement la glace (15) dans sa position normale de fonctionnement.

4. Bloc optique suivant l'une quelconque des revendications 1 à 3, **caractérisé en ce que** lesdits organes d'encliquetage complémentaires (21, 22, 31, 32) sont adaptés pour définir, lorsqu'ils sont assemblés, une butée axiale, la glace (15) pouvant être détachée du boîtier (5) sensiblement axialement lorsqu'ils sont dégagés.

5. Bloc optique suivant l'une quelconque des revendications 1 à 4, **caractérisé en ce que** l'un (22, 32) des organes d'encliquetage (21, 22, 31, 32) de ladite paire est un organe rigide, tandis que l'autre est un organe élastique (21, 31).

6. Bloc optique suivant l'une quelconque des revendications 1 à 5, **caractérisé en ce que** les organes de fixation (21, 22, 31, 32) comportent une pluralité de paires d'organes d'encliquetage complémentaires, lesdits organes d'encliquetage étant répartis sur des régions périphériques du boîtier (5) et de la glace (15).

7. Bloc optique suivant l'une quelconque des revendications 1 à 6, **caractérisé en ce qu'**une paire d'organes d'encliquetage comprend un organe femelle (22, 31) configuré en gâche, et un organe mâle (21, 32) configuré en crochet susceptible de coulisser dans la gâche.

8. Face avant de véhicule automobile équipée d'un bloc optique selon l'une quelconque des revendications 1 à 7.

9. Véhicule automobile équipé d'un bloc optique selon l'une quelconque des revendications 1 à 7.
